# FASCICULE DE BREVET EUROPEEN

(11) **EP 3 499 623 B1**
(45) Date de publication et mention de la délivrance du brevet: **03.06.2020**
(21) Numéro de dépôt: 18208316.2
(22) Date de dépôt: 26.11.2018
(51) Int. Cl.: H01M 8/1007, H01M 8/0267, H01M 8/0258, H01M 8/0263, H01M 8/0273, H01M 8/0276, H01M 8/028

(54) **RÉACTEUR ÉLECTROCHIMIQUE A MEMBRANE ÉCHANGEUSE DE PROTONS À HAUTE TEMPERATURE ADAPTÉ POUR STOCKAGE BASSE TEMPERATURE**
ELEKTROCHEMISCHER REAKTOR MIT PROTONENAUSTAUSCHMEMBRAN FÜR HOHE TEMPERATUREN, DIE FÜR LAGERUNG BEI NIEDRIGEN TEMPERATUREN GEEIGNET IST
ELECTROCHEMICAL REACTOR WITH HIGH TEMPERATURE PROTON EXCHANGE MEMBRANE SUITABLE FOR LOW TEMPERATURE STORAGE

(30) Priorité: 13.12.2017 FR 1762067
(43) Date de publication de la demande: 19.06.2019
(73) Titulaire: Commissariat à l'Énergie Atomique et aux Énergies Alternatives, 75015 Paris (FR)
(72) Inventeur: POIROT-CROUVEZIER, Jean-Philippe, 38450 SAINT-GEORGES DE COMMIERS (FR)
(74) Mandataire: GIE Innovation Competence Group

(56) Documents cités:
- WO-A1-2013/132843
- FR-A1- 2 997 562
- US-A1- 2005 089 737
- US-A1- 2005 112 445
- US-A1- 2005 249 996
- US-A1- 2006 110 651
- US-A1- 2009 042 075

## Description

L'invention concerne les réacteurs électrochimiques à membrane échangeuse de protons, tels que les électrolyseurs pour la production de dihydrogène par électrolyse de l'eau, ou les piles à combustible pour la production d'électricité.

Les réacteurs électrochimiques à membrane échangeuse de protons sont utilisés à une température de fonctionnement inférieure à 300°C. La membrane échangeuse de protons forme un électrolyte solide. Pour des applications basse température, on utilise généralement des membranes de type polybenzimidazole chargé en acide phosphorique.

En particulier, une pile à combustible inclut usuellement un empilement de cellules élémentaires dans lesquelles a lieu une réaction électrochimique entre deux réactifs qui sont introduits de manière continue. Le combustible est apporté au contact de l'anode, le comburant est amené au contact de la cathode.

La réaction est subdivisée en deux demi-réactions, qui ont lieu d'une part à l'interface anode/membrane et d'autre part à l'interface cathode/membrane. Les demi-réactions ne peuvent avoir lieu que s'il existe un conducteur ionique entre les deux électrodes et un conducteur électronique.

Les fluides sont amenés au contact des zones réactionnelles à partir de collecteurs d'entrée et de sortie qui traversent généralement l'empilement de part en part. Les fluides sont généralement guidés entre un collecteur et leur zone réactionnelle par des canaux d'écoulement d'une plaque bipolaire, ayant également une fonction de conduction électrique et une fonction de transmission d'un effort de serrage de l'empilement de cellules. Chaque collecteur est entouré d'un joint évitant le mélange des différents fluides circulant dans la pile à combustible. Chaque cellule dispose de moyens d'injection au travers des joints pour amener le fluide concerné, du collecteur vers la zone réactionnelle.

Un joint périphérique est disposé à la périphérie de chaque plaque bipolaire et ceinture ainsi une partie médiane de la pile incluant la zone réactionnelle et les collecteurs d'écoulement. Ce joint périphérique assure l'étanchéité des différents circuits d'écoulement entre eux et vis-à-vis de l'extérieur.

Une telle pile à combustible met donc en œuvre au moins deux types de joints différents : les joints périphériques et les joints ceinturant les collecteurs d'écoulement.

En fonction de l'application visée, une pile à combustible doit respecter un cahier des charges précis en termes de températures admissibles :
- le fonctionnement de la pile doit être possible sur une plage de température donnée allant par exemple de 100°C à 200°C ;
- le stockage de la pile doit être possible sur une plage de température allant par exemple de -55°C à +70°C, cette plage de température étant donc assez différente de la plage de température de fonctionnement. Sur cette plage de température, le joint périphérique doit encore garantir l'étanchéité pour éviter de polluer l'intérieur de la pile à combustible.

Même dans un environnement très froid, la température interne de la pile à combustible est régulée à sa température de fonctionnement habituelle, car les pertes thermiques de la réaction électrochimique sont largement supérieures aux échanges de chaleur à sa périphérie. Une température interne de la pile à combustible n'est donc inférieure à sa température habituelle de fonctionnement qu'en dehors de son fonctionnement : lors de phases d'arrêt, de stockage, ou de maintenance par exemple.

Pour l'exemple donné précédemment, en prenant en compte les contraintes de fonctionnement et de stockage citées ci-dessus, l'étanchéité du joint périphérique doit être assurée sur toute la gamme de température de -55°C à +200°C. Cette contrainte réduit fortement les choix technologiques disponibles pour un tel joint périphérique. En effet, un certain nombre de matériaux de joints, utilisables à la température de fonctionnement de la pile à combustible, deviennent rigides à basse température. Les joints ne compensent alors plus les dilatations différentielles des différentes pièces ou les défauts de forme, aboutissant à une étanchéité imparfaite. US 2006/110651 divulgue un réacteur électrochimique, comprenant un guide d'écoulement, un assemblage membrane/ électrodes et un circuit d'écoulement de fluide de refroidissement.

L'invention vise à résoudre un ou plusieurs de ces inconvénients. L'invention porte ainsi sur un réacteur électrochimique, tel que défini dans les revendications annexées.

L'homme du métier comprendra que chacune des caractéristiques des variantes d'une revendication indépendante peut être combinée indépendamment aux caractéristiques d'une revendication dépendante ou de la description, sans pour autant constituer une généralisation intermédiaire.

L'invention porte également sur un système tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue d'une plaque bipolaire d'une pile à combustible selon un mode de réalisation de l'invention, munie de joints d'étanchéité ;
- la figure 3 illustre schématiquement un circuit de refroidissement intermédiaire de la figure 2 ;
- la figure 4 illustre schématiquement un exemple de circuit de refroidissement et d'injection de fluide de refroidissement selon une variante de l'invention ;
- la figure 5 illustre schématiquement un exemple de circuit de refroidissement et d'injection de fluide de refroidissement selon une autre variante de l'invention ;
- la figure 6 illustre schématiquement un circuit de refroidissement intermédiaire pour une pile à combustible selon un autre mode de réalisation de l'invention.

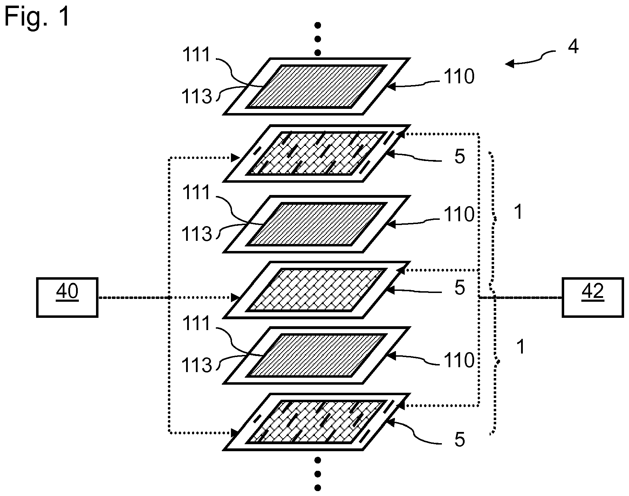

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement de la zone réactive.

Chaque cellule 1 comprend un assemblage membrane/électrodes 110 ou AME 110. Un assemblage membrane/électrodes 110 comprend un électrolyte solide 113, une cathode (non illustrée) et une anode 111 placées de part et d'autre de l'électrolyte et fixées sur cet électrolyte 113. La couche d'électrolyte 113 forme une membrane permettant une conduction protonique tout en étant imperméable aux gaz présents dans la cellule. La couche d'électrolyte empêche également un passage des électrons entre l'anode 111 et la cathode. L'électrolyte 113 est ici configuré pour être mis en œuvre à une température de fonctionnement supérieure à 100°C, typiquement une température de fonctionnement de 180°C. Un tel électrolyte 113 peut par exemple être en polybenzimidazole (PBI) dopé avec de l'acide phosphorique

Entre chaque couple d'AME adjacents, une plaque bipolaire 5 est disposée. Sur chaque face d'une AME, une plaque bipolaire 5 forme un guide d'écoulement de réactif. Chaque plaque bipolaire 5 définit ici des canaux d'écoulement anodiques et des canaux d'écoulement cathodiques sur des faces externes opposées. Des plaques bipolaires 5 définissent également des canaux d'écoulement de liquide de refroidissement entre deux assemblages membrane/électrodes successifs. Les plaques bipolaires 5 peuvent être formées chacune de façon connue en soi à partir de deux tôles métalliques conductrices assemblées, par exemple en acier inoxydable, ou en alliage de titane, en alliage d'aluminium, en alliage de nickel ou en alliage de tantale. Chaque tôle définit alors une face externe respective. Les plaques bipolaires 5 peuvent également être obtenues par tout autre procédé, par exemple le moulage ou l'injection à partir de composites carbone-polymère. Les plaques bipolaires 5 peuvent ainsi également être formées d'un seul tenant. Les faces externes de la plaque bipolaire 5 sont alors définies par une telle pièce d'un seul tenant. Chaque cellule 1 peut en outre comprendre une couche de diffusion de gaz (non illustrée) disposée entre l'anode et une plaque bipolaire, et une autre couche de diffusion de gaz disposée entre la cathode et une autre plaque bipolaire. Les assemblages membrane/électrodes 110 peuvent comporter des renforts, non illustrés ici.

De façon connue en soi, durant le fonctionnement de la pile à combustible 4, de l'air s'écoule entre un AME 110 et une plaque bipolaire 5, et du dihydrogène s'écoule entre cet AME 110 et une autre plaque bipolaire 5. Les plaques bipolaires 5 ont notamment une fonction de guidage d'écoulement des réactifs de part et d'autre de l'AME 110. Au niveau de l'anode, le dihydrogène est ionisé pour produire des protons qui traversent l'AME 110. Les électrons produits par cette réaction sont collectés par une plaque bipolaire 5. Les électrons produits sont ensuite appliqués sur une charge électrique connectée à la pile à combustible 4 pour former un courant électrique. Au niveau de la cathode, de l'oxygène est réduit et réagit avec les protons pour former de l'eau. Les réactions au niveau de l'anode et de la cathode sont régies comme suit :

2*H*₂ → 4*H*⁺ + 4*e*⁻ au niveau de l'anode ;

4*H*⁺ + 4*e*⁻ + *O*₂ → 2*H*₂*O* au niveau de la cathode.

Durant son fonctionnement, une cellule 1 de la pile à combustible 4 génère usuellement une tension continue entre l'anode et la cathode de l'ordre de 1V.

La source de comburant 42 comprend typiquement un compresseur pour introduire l'air à une pression donnée à l'entrée des cellules 1. Un tel compresseur reçoit par exemple une consigne de pression d'air, la pression d'air pouvant être régulée par une vitesse de rotation variable du compresseur.

L'empilement des plaques bipolaires 5 et des assemblages membrane/électrodes 110 est destiné à former une pluralité de collecteurs d'écoulement. À cet effet, des orifices respectifs sont ménagés à travers les plaques bipolaires 5 et à travers les assemblages membrane/électrodes 110. Les orifices des plaques bipolaires 5 et des assemblages membrane/électrodes 110 sont disposés en vis-à-vis afin de former les différents collecteurs d'écoulement.

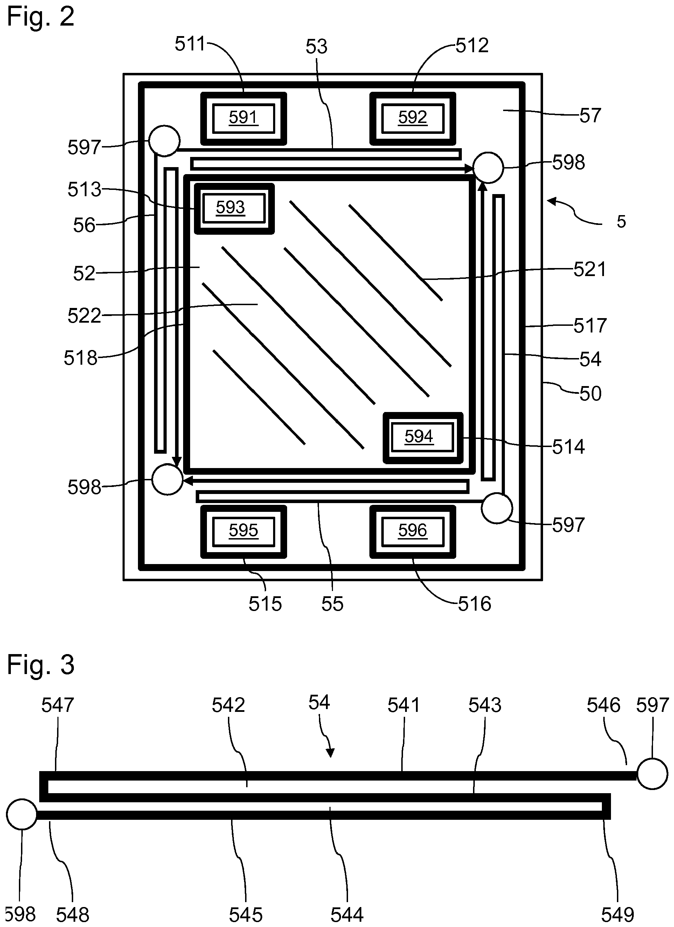

La figure 2 est une vue de dessus schématique d'une plaque bipolaire 5 donnée à titre d'exemple, pour une pile à combustible selon un mode de réalisation de l'invention. Une tôle 50 de la plaque bipolaire 5 est ainsi illustrée en vue de dessus, munie de différents joints. Les joints sont plaqués contre une AME 110, non illustrée sur cette figure.

Les plaques bipolaires 5 comportent ainsi des orifices 591 et 592 au niveau d'une première extrémité longitudinale, et des orifices 595 et 596 au niveau d'une deuxième extrémité longitudinale. Dans une zone médiane 52, les plaques bipolaires 5 comportent un orifice 593 à proximité des orifices 591 et 592, et un orifice 594 à proximité des orifices 595 et 596. Les orifices 591 à 596 sont ceinturés par des joints 511 à 516 respectivement.

L'orifice 591 sert par exemple pour former un collecteur d'alimentation en carburant, l'orifice 596 sert par exemple pour former un collecteur d'évacuation de résidus de combustion et de carburant non utilisé. L'orifice 593 sert par exemple pour former un collecteur d'alimentation en liquide de refroidissement pour la zone médiane 52, l'orifice 594 sert par exemple pour former un collecteur d'évacuation de ce liquide de refroidissement. L'orifice 592 sert par exemple pour former un collecteur d'alimentation en comburant, et l'orifice 595 sert par exemple pour former un collecteur d'évacuation d'eau produite et de comburant non utilisé.

La zone médiane 52 correspond globalement à une zone réactive de la pile à combustible. La zone médiane 52 comporte des canaux d'écoulement 522 illustrés schématiquement, par exemple des canaux d'écoulement anodiques délimités par des parois 521.

Un joint périphérique 517 ceinture l'ensemble des orifices ou collecteurs 591 à 596 et la partie médiane 52. Un joint 518 ceinture la partie médiane 52. Une zone intermédiaire 57 est ainsi ménagée entre les joints 517 et 518, les orifices 591, 592, 595 et 596 traversant la zone intermédiaire 57. Les joints 511 à 518, sont comprimés entre une tôle 50 de la plaque bipolaire 5 et un AME.

Dans l'exemple illustré, la plaque bipolaire 5 présente sensiblement une forme rectangulaire. Les joints 517 et 518 présentent ici également une forme rectangulaire, qui sera utilisée pour détailler une configuration simple de l'invention.

Dans la zone intermédiaire 57, des circuits d'écoulement 53 à 56 de fluide de refroidissement ou fluide caloporteur sont ménagés entre les joints 517 et 518. En particulier :
- le circuit d'écoulement de fluide de refroidissement 53 est ménagé entre des côtés parallèles des joints 517 et 518. Le circuit d'écoulement 53 relie un collecteur d'admission de fluide de refroidissement 597 à un collecteur de sortie de fluide de refroidissement 598 ;
- le circuit d'écoulement de fluide de refroidissement 54 est ménagé entre des autres côtés parallèles des joints 517 et 518. Le circuit d'écoulement 54 relie un collecteur d'admission de fluide de refroidissement 597 à un collecteur de sortie de fluide de refroidissement 598 ;
- le circuit d'écoulement de fluide de refroidissement 55 est ménagé entre des autres côtés parallèles des joints 517 et 518. Le circuit d'écoulement 55 relie un collecteur d'admission de fluide de refroidissement 597 à un collecteur de sortie de fluide de refroidissement 598 ;
- le circuit d'écoulement de fluide de refroidissement 56 est ménagé entre des autres côtés parallèles des joints 517 et 518. Le circuit d'écoulement 56 relie un collecteur d'admission de fluide de refroidissement 597 à un collecteur de sortie de fluide de refroidissement 598. Les collecteurs de fluide de refroidissement 597 et 598 sont ceinturés par des joints non illustrés ici, dans un souci de lisibilité. Une pompe ou un compresseur (en fonction de la nature du fluide de refroidissement) non illustré permet d'introduire le fluide de refroidissement au niveau des collecteurs 597 et de retirer ce fluide au niveau des collecteurs 598.

Les circuits d'écoulement de fluide de refroidissement 53, 54, 55 et 56 sont configurés pour former un gradient thermique entre le joint périphérique 517 et le joint intermédiaire 518, lorsque la pile à combustible 4 est en fonctionnement.

Chacun des circuits d'écoulement 53 à 56 comporte d'une part un canal d'écoulement s'étendant le long du joint périphérique 517, d'autre part un canal d'écoulement s'étendant le long du joint intermédiaire 518, et un autre canal d'écoulement reliant ceux-ci.

La configuration schématique du circuit d'écoulement 54 est illustrée à la figure 3. Le circuit d'écoulement 54 comporte un canal d'écoulement 541, présentant une première extrémité 546 connectée à un collecteur d'admission de fluide de refroidissement 597, et une deuxième extrémité 547 opposée à l'extrémité 546. Le canal d'écoulement 541 s'étend parallèlement à un côté du joint périphérique 517, de façon adjacente à celui-ci.

Le circuit d'écoulement 54 comporte également un canal d'écoulement 545, présentant une première extrémité 548 connectée à un collecteur d'échappement de fluide de refroidissement 598, et une deuxième extrémité 549 opposée à l'extrémité 548. Le canal d'écoulement 545 s'étend parallèlement à un côté du joint intermédiaire 518, de façon adjacente à celui-ci.

Le circuit d'écoulement 54 comporte également un canal d'écoulement 543, reliant l'extrémité 547 à l'extrémité 549. Le canal d'écoulement 543 est séparé du canal d'écoulement 541 par une paroi 542. La paroi 542 empêche notamment l'écoulement de passer directement de l'extrémité 546 vers l'extrémité 549. Le canal d'écoulement 543 est séparé du canal d'écoulement 545 par une paroi 544. La paroi 544 empêche notamment l'écoulement de passer directement de l'extrémité 547 vers l'extrémité 548. Ainsi, lorsqu'un fluide est introduit au niveau du collecteur 597, il doit traverser le canal d'écoulement 541 en longeant le joint périphérique 517, traverser le canal d'écoulement 543, puis traverser le canal d'écoulement 545 en longeant le joint intermédiaire 518 afin d'atteindre le collecteur d'échappement 598. Les sens d'écoulement dans les circuits d'écoulement 53 à 56 sont illustrés par les flèches à la figure 2.

Dans cette configuration, en forçant le fluide de refroidissement à passer par le canal d'écoulement 543, on garantit un gradient de température entre le canal d'écoulement 541 longeant le joint périphérique 517, et le canal d'écoulement 545 longeant le joint intermédiaire 518.

En particulier, les collecteurs d'écoulement de fluide de refroidissement sont connectés à un circuit de refroidissement et d'injection. Le circuit de refroidissement est notamment configuré pour refroidir le fluide de refroidissement prélevé au niveau d'un collecteur 598 par l'intermédiaire d'un échangeur, et configuré pour entraîner ce fluide de refroidissement de l'échangeur vers le collecteur 597.

Ainsi, un fluide de refroidissement est introduit à basse température dans les circuits de refroidissement 53 à 57 par l'intermédiaire des collecteurs 597. Le fluide de refroidissement traverse les canaux d'écoulement longeant le joint 517, et refroidissent ainsi le joint 517 pour le maintenir à la température incluse dans la plage d'utilisation de son matériau. Le joint 517 conserve ainsi ses propriétés d'étanchéité même lorsque la pile à combustible 4 est en fonctionnement.

Le joint périphérique 517 et le joint intermédiaire 518 sont avantageusement constitués de matériaux différents, présentant des plages de températures d'utilisation différentes. Le matériau du joint périphérique 517 inclut par exemple une température de -20° C dans sa plage d'utilisation, voire -60°C dans sa plage d'utilisation, pour pouvoir stocker la pile à combustible 4 à basse température, sans problème d'étanchéité vis-à-vis de l'environnement. Le matériau du joint intermédiaire 518 inclut par exemple une température de 180°C dans sa plage d'utilisation, voire une température de 200°C dans sa plage d'utilisation. Une telle température correspond à une température de fonctionnement de certaines piles à combustible à haute température. La température de fonctionnement de la pile à combustible 4 devra par exemple être supérieure à la température de transition vitreuse du joint 518, et inférieure à sa température de destruction.

L'invention s'avère ainsi particulièrement adaptée aux réacteurs électrochimiques fonctionnant à une température supérieure à 100°C, pour lesquels la température de fonctionnement est donc très différente de la température de stockage pour laquelle ces réacteurs électrochimiques doivent être dimensionnés.

Dans l'exemple, on utilise plusieurs circuits d'écoulement 53 à 56, ce qui permet d'accroître l'homogénéité de la température du fluide de refroidissement autour du joint 518 par rapport à un circuit d'écoulement unique. Une telle homogénéité de température permet de favoriser le fonctionnement des réactions électrochimiques dans la zone médiane 52.

L'invention permet ainsi de réaliser des joints 517 et 518 en des matériaux différents, présentant des plages de température d'utilisation différentes. Ainsi, un plus grand nombre de matériaux est disponible d'une part pour le joint 517, et d'autre part pour le joint 518. Cela permet notamment de disposer de plus de choix technologiques pour les joints 517 et 518, en vue de répondre à des exigences de compatibilité chimique, de propriétés mécaniques, ou encore de durée de vie. Les joints 511, 512, 515 et 516 sont avantageusement dans le même matériau que le joint 517.

Comme illustré à la figure 2, avantageusement :
- les collecteurs 597 sont plus proches du joint périphérique 517 que du joint intermédiaire 518. Les joints entourant les collecteurs 597 ne sont ainsi pas excessivement réchauffés durant le fonctionnement de la pile 4. On peut éventuellement envisager de positionner les collecteurs 517 dans des excroissances latérales de la plaque bipolaire 5 ;
- les collecteurs 598 sont plus proches du joint intermédiaire 518 que du joint périphérique 517. Les joints entourant les collecteurs 598 ne sont ainsi pas excessivement refroidis durant le fonctionnement de la pile 4.

Avantageusement, les circuits d'écoulement 53 à 56 sont configurés pour présenter une longueur cumulée des tronçons longeant le joint 517 (tronçons s'étendant depuis une extrémité reliée à un collecteur 597 à une extrémité opposée) s'étendant sur au moins 60% de la longueur du joint périphérique. Une telle dimension permet de garantir un refroidissement optimal du joint 517 pour garantir son étanchéité.

Les collecteurs 598 sont avantageusement ceinturés par des joints réalisés dans le même matériau que le joint intermédiaire 518.

En fonction du matériau choisi pour les joints 518, et le cas échéant les joints 513, 514 et les joints du collecteur 598, ceux-ci peuvent s'avérer non étanches à une température de stockage très basse de la pile à combustible 4. La pile à combustible 4 ne présente cependant pas de risque de pollution externe, du fait de la présence du joint 517 pour lequel cette température est dans sa plage d'utilisation.

Pour pallier ce problème éventuel de défaut d'étanchéité de ces joints à basse température, on peut soit prévoir que le fluide de refroidissement circulant dans les circuits 53 à 56 soit compatible avec les autres circuits d'écoulement, à savoir les circuits d'écoulement de réactifs ou les circuits d'écoulement d'autres fluides caloporteurs. Ce fluide de refroidissement peut par exemple être de l'air ou de l'eau. L'utilisation de l'air comme fluide de refroidissement permet avantageusement de collecter d'éventuelles fuites de comburant à la périphérie de la zone médiane 52. De l'air appauvri récupéré au niveau d'un collecteur d'échappement (incluant typiquement entre eux 8 et 12 % dudit oxygène) s'avère particulièrement approprié, du fait du faible risque d'inflammation avec une fuite de carburant dihydrogène.

Si le fluide de refroidissement est en pratique incompatible avec le fluide devant traverser les autres canaux d'écoulement avec lesquels il peut accidentellement communiquer en cas de défaut d'étanchéité, on peut prévoir une préparation au stockage de la pile à combustible 4 incluant :
- une purge préalable de ce fluide de refroidissement ;
- un remplacement de ce fluide de refroidissement par de l'air.

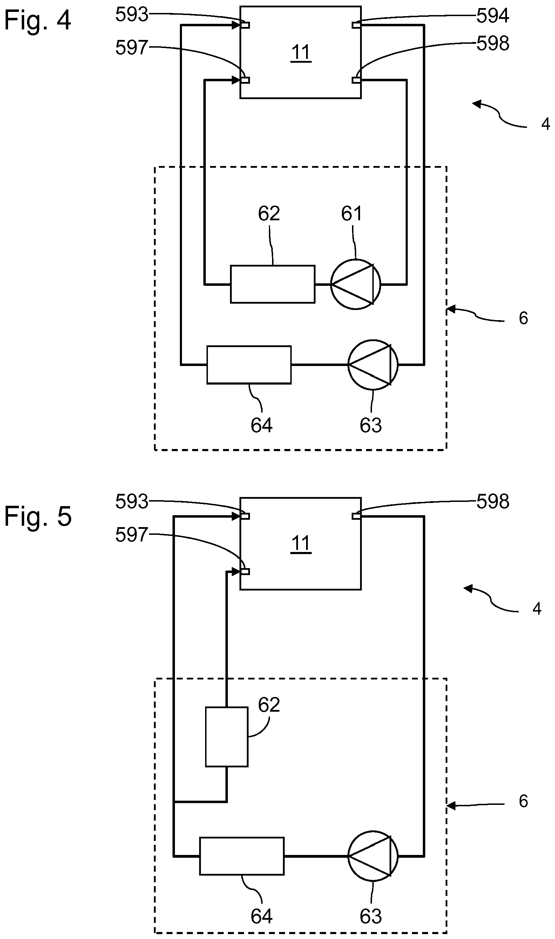

La figure 4 illustre schématiquement un exemple de circuit de refroidissement et d'injection 6 de fluide de refroidissement selon une variante de l'invention. Le circuit de refroidissement et d'injection 6 est connecté à un empilement 11 de cellules électrochimiques. Le circuit de refroidissement et d'injection 6 comprend ici un circuit de refroidissement et d'injection indépendant pour le fluide de refroidissement des joints 517 et 518. Le circuit de refroidissement et d'injection 6 comprend ici un autre circuit de refroidissement et d'injection indépendant pour le fluide de refroidissement de la zone médiane 52. Cette configuration correspond typiquement à celle détaillée en référence à la figure 2. Le fluide de refroidissement pour la zone médiane 52 peut être différent de celui utilisé pour les joints 517 et 518.

Le circuit de refroidissement et d'injection 6 est ici appliqué pour un fluide de refroidissement liquide. Le circuit de refroidissement pour les joints 517 et 518 comprend ici une pompe 61 dont l'entrée est connectée au collecteur 598. Le circuit de refroidissement pour les joints 517 et 518 comprend par ailleurs un échangeur thermique 62, dont l'entrée est connectée à la sortie de la pompe 61. La sortie de l'échangeur 62 est connectée au collecteur 597. Pendant le fonctionnement de la pile 4, l'échangeur thermique 62 est destiné à dissiper la chaleur du liquide de refroidissement récupéré au niveau d'un collecteur 598. Le liquide de refroidissement introduit au niveau d'un collecteur 597 permet donc bien ensuite de refroidir le joint périphérique 517 pour le maintenir dans sa plage de température d'utilisation.

Le circuit de refroidissement pour la zone médiane 52 comprend ici une pompe 63 dont l'entrée est connectée au collecteur 594. Le circuit de refroidissement pour la zone médiane 52 comprend par ailleurs un échangeur thermique 64, dont l'entrée est connectée à la sortie de la pompe 63. La sortie de l'échangeur 64 est connectée au collecteur 593.

La figure 5 illustre schématiquement un exemple de circuit de refroidissement et d'injection 6 de fluide de refroidissement selon une autre variante de l'invention. Le circuit de refroidissement et d'injection 6 est connecté à un empilement 11 de cellules électrochimiques. Le circuit de refroidissement et d'injection 6 comprend ici un circuit de refroidissement et d'injection pour le fluide de refroidissement des joints 517 et 518, relié au circuit de refroidissement et d'injection pour la zone médiane 52. Le fluide de refroidissement pour la zone médiane 52 est ici identique à celui utilisé pour les joints 517 et 518. Dans cette configuration, les circuits 53 à 56 sont connectés au collecteur 594 plutôt qu'au collecteur 598.

Le circuit de refroidissement et d'injection 6 est ici appliqué pour un fluide de refroidissement liquide. Le collecteur 598 récupère du liquide pour le refroidissement des joints 517 et 518 et du liquide de refroidissement pour la zone médiane 52. Le circuit 6 comprend une pompe 63 dont l'entrée est connectée au collecteur 598. Le circuit 6 comprend par ailleurs un échangeur thermique 64, dont l'entrée est connectée à la sortie de la pompe 63. La sortie de l'échangeur thermique 64 est connectée au collecteur 593, par l'intermédiaire d'une première branche. Cette première branche est destinée à conduire du liquide de refroidissement vers la zone médiane 52 dans l'empilement 11. La sortie de l'échangeur thermique 64 est par ailleurs connectée au collecteur 597, par l'intermédiaire d'une deuxième branche. Cette deuxième branche est destinée à conduire du liquide de refroidissement des joints 517 et 518 dans l'empilement 11. Cette deuxième branche incluant un échangeur thermique 62 disposé entre le collecteur 597 et la sortie de l'échangeur thermique 64.

La sortie de l'échangeur 62 est connectée au collecteur 597. Pendant le fonctionnement de la pile 4, l'échangeur thermique 62 est destiné à dissiper la chaleur du liquide de refroidissement récupéré au niveau d'un collecteur 598. Le liquide de refroidissement introduit au niveau d'un collecteur 597 permet donc bien ensuite de refroidir le joint périphérique 517 pour le maintenir dans sa plage de température d'utilisation. Une telle configuration permet notamment de bénéficier d'un échangeur thermique 64 présentant un dimensionnement supérieur à l'échangeur thermique 62, et permettant ainsi de réaliser un refroidissement élevé du liquide de refroidissement.

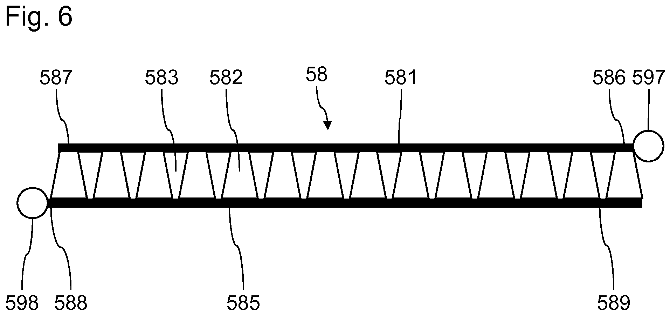

La figure 6 illustre schématiquement un circuit de refroidissement intermédiaire 58 pour une pile à combustible 4 selon un autre mode de réalisation de l'invention. Le circuit d'écoulement 58 comporte un canal d'écoulement 581,

Le circuit 58 (d'autres circuits 58 peuvent être répartis autour du joint intermédiaire 518) présente une première extrémité 586 connectée au collecteur d'admission de fluide de refroidissement 597, et une deuxième extrémité 587 opposée à l'extrémité 586. Le canal d'écoulement 581 s'étend parallèlement à un côté du joint périphérique 517, de façon adjacente à celui-ci.

Le circuit d'écoulement 58 comporte également un canal d'écoulement 585, présentant une première extrémité 588 connectée au collecteur d'échappement de fluide de refroidissement 598, et une deuxième extrémité 589 opposée à l'extrémité 588. Le canal d'écoulement 585 s'étend parallèlement à un côté du joint intermédiaire 588, de façon adjacente à celui-ci. L'extrémité 586 du canal d'écoulement 581 est positionnée à proximité de la deuxième extrémité 589 du deuxième canal d'écoulement 585.

Entre les canaux d'écoulement 581 et 585, des canaux d'écoulement 583 sont ménagés. Ces canaux d'écoulement 583 sont répartis le long du premier canal d'écoulement 581 et relient chacun le canal d'écoulement 581 au canal d'écoulement 585, de sorte qu'un fluide introduit au niveau du collecteur 597 doit traverser un canal d'écoulement 583 pour rejoindre le collecteur 598. Les canaux 583 sont configurés pour induire des pertes de charge dans un écoulement de fluide entre les canaux d'écoulement 581 et 585, afin de favoriser la formation d'un gradient de température entre ces canaux d'écoulement 581 et 585. Les canaux d'écoulement 583 sont ici délimités par des parois 582 positionnées entre les canaux 581 et 585, de façon à limiter la section des canaux 583. Les parois 582 forment ici un rétrécissement progressif de section en partant du canal 581 vers le canal 585.

Dans les exemples décrits précédemment, les collecteurs 591, 592, 595 et 596 sont positionnés dans la zone intermédiaire 57. On peut cependant également envisager des collecteurs 591, 592, 595 et 596 ceinturés par le joint 518. Les joints 511, 512, 515 et 516 sont alors réalisés dans le même matériau que le joint 518. Si ces joints 511, 512, 515 et 516 sont non étanches à une température de stockage, on peut prévoir que les canaux d'écoulement destinés à être traversés par des réactifs soient purgés au préalable avant de procéder au stockage de la pile à combustible 4, et donc avant un refroidissement de ces joints jusqu'à une température inférieure à leur plage d'utilisation.

L'invention a été décrite pour un exemple dans lequel les canaux d'écoulement de liquide de refroidissement pour les joints 517 et 518 sont positionnés sur une face externe de la plaque bipolaire 5. On peut également prévoir que de tels canaux d'écoulement soient ménagés sur les deux faces externes de la plaque bipolaire 5. On peut également prévoir que ces canaux d'écoulement de refroidissement des joints 517 et 518 soient ménagés à l'intérieur de la plaque bipolaire, de façon étanche par rapport aux canaux d'écoulement de liquide de refroidissement de la zone active disposés dans la zone médiane 52.

L'invention a été décrite auparavant pour une application à des piles à combustible. L'invention s'applique bien entendu également à d'autres réacteurs électrochimiques à membrane échangeuse de protons, par exemple des électrolyseurs. Dans un tel cas, les plaques bipolaires 5 peuvent être remplacées par des guides d'écoulement polarisés à des tensions d'électrolyse respectives.

L'invention a été décrite précédemment pour une pile à combustible alimentée en carburant dihydrogène. L'invention s'applique bien entendu également à des piles à combustible utilisant d'autres types de combustible, par exemple du méthanol.

Le fluide de refroidissement parcourant les circuits de refroidissement 53 à 56 peut être un des réactifs parcourant la zone médiane 52. On peut alors prévoir que l'un des réactifs soit introduit dans les circuits 53 à 56 par l'intermédiaire d'un collecteur 597, récupéré au niveau d'un collecteur 598, puis réintroduit au niveau du collecteur 591 ou 592 le cas échéant. On peut également prévoir que l'un des réactifs soit récupéré au niveau du collecteur 595 ou 596 le cas échéant, puis introduit dans les circuits 53 à 56 par l'intermédiaire d'un collecteur 597, après avoir traversé un échangeur thermique. Un dispositif de récupération d'eau pourra être inclus dans le circuit 6 si l'on souhaite réintroduire seulement la phase gazeuse à une sortie de réactif.

## Revendications

1. Réacteur électrochimique (4), comprenant :
- un guide d'écoulement (5) ;
- un assemblage membrane/électrodes (110) ;
- un joint périphérique (517) disposé entre le guide d'écoulement (5) et l'assemblage membrane/électrodes (110) ;
**caractérisé en ce qu'**il comprend en outre :
- un joint intermédiaire (518) disposé entre le guide d'écoulement (5) et l'assemblage membrane/électrodes (110), le joint intermédiaire étant ceinturé par le joint périphérique (517) et ceinturant une zone réactive (52) du réacteur électrochimique ;
- au moins un premier circuit d'écoulement (54) de fluide de refroidissement disposé entre le joint périphérique (517) et le joint intermédiaire (518), le circuit d'écoulement comportant :
- un premier canal d'écoulement (541) s'étendant le long du joint périphérique (517) entre une première extrémité (546) connectée à un premier collecteur (597) de fluide de refroidissement et une deuxième extrémité (547) opposée à la première ;
- un deuxième canal d'écoulement (545) s'étendant le long du joint intermédiaire (518) entre une première extrémité (548) connectée à un deuxième collecteur de fluide de refroidissement (598) et une deuxième extrémité (549) opposée à la première ; et
- soit un troisième canal d'écoulement (543) reliant les deuxièmes extrémités (547, 549) respectives des premier et deuxième canaux d'écoulement (541,545), de sorte qu'un fluide introduit au niveau du premier collecteur doit traverser le troisième canal d'écoulement (543) pour rejoindre le deuxième collecteur ;
- soit des quatrièmes canaux d'écoulement (583) répartis le long du premier canal d'écoulement (581) et reliant chacun le premier canal d'écoulement au deuxième canal d'écoulement (585), de sorte qu'un fluide introduit au niveau du premier collecteur (597) doit traverser un quatrième canal d'écoulement (583) pour rejoindre le deuxième collecteur (598), la première extrémité (586) du premier canal d'écoulement étant positionnée à proximité de la deuxième extrémité (589) du deuxième canal d'écoulement (585), lesdits quatrièmes canaux d'écoulement étant configurés pour induire des pertes de charge dans un écoulement de fluide entre les premier et deuxième canaux d'écoulement.

2. Réacteur électrochimique (4) selon la revendication 1, dans lequel le joint périphérique (517) et le joint intermédiaire (518) sont constitués de matériaux différents, le matériau du joint périphérique (517) incluant une température de -20° C dans sa plage d'utilisation, le matériau du joint intermédiaire (518) incluant une température de 180° C dans sa plage d'utilisation.

3. Réacteur électrochimique (4) selon la revendication 1 ou 2, dans lequel des cinquièmes canaux d'écoulement de fluide de refroidissement sont ménagés à l'intérieur de la plaque bipolaire (5) à la verticale de la zone réactive (52), le circuit d'écoulement (53) de fluide de refroidissement et les cinquièmes canaux d'écoulement de fluide de refroidissement incluant un même fluide de refroidissement.

4. Réacteur électrochimique (4) selon les revendications 2 et 3, dans lequel les cinquièmes canaux d'écoulement de fluide de refroidissement sont en communication avec des troisième et quatrième collecteurs (593, 594) disposés dans la zone réactive (52), les troisième et quatrième collecteurs étant ceinturés par des joints (513, 514) formés dans le même matériau que le joint intermédiaire (518).

5. Réacteur électrochimique (4) selon l'une quelconque des revendications précédentes, dans lequel le circuit d'écoulement (53) de fluide de refroidissement inclut un fluide de refroidissement sélectionné dans le groupe constitué de l'air, du dihydrogène, de l'eau et du glycol.

6. Réacteur électrochimique (4) selon l'une quelconque des revendications précédentes, dans lequel le premier collecteur (597) est plus proche du joint périphérique (517) que du joint intermédiaire (518).

7. Réacteur électrochimique (4) selon l'une quelconque des revendications précédentes, dans lequel le deuxième collecteur (598) est plus proche du joint intermédiaire (518) que du joint périphérique (517).

8. Réacteur électrochimique (4) selon l'une quelconque des revendications précédentes, comprenant plusieurs circuits d'écoulement de fluide de refroidissement (54, 55, 56) disposés entre le joint périphérique (517) et le joint intermédiaire (518), similaires au premier circuit d'écoulement (54) de fluide de refroidissement, la longueur cumulée des premiers canaux d'écoulement de ces circuits d'écoulement est au moins égale à 60 % de la longueur du joint périphérique (517).

9. Réacteur électrochimique selon l'une quelconque des revendications précédentes, dans lequel ledit premier canal d'écoulement (541) est disposé entre le joint périphérique (517) et ledit deuxième canal d'écoulement (545).

10. Système incluant un réacteur électrochimique selon l'une quelconque des revendications précédentes, comprenant en outre un compresseur (61) connecté aux premier et deuxième collecteurs (597, 598), ledit compresseur étant configuré pour introduire de l'air comprimé au niveau du premier collecteur.

11. Système selon la revendication 10, comprenant en outre un échangeur thermique (62) ayant une entrée connectée à une sortie du compresseur et une sortie connectée audit premier collecteur de fluide de refroidissement.

12. Système selon la revendication 11, dans lequel l'entrée du compresseur (62) est connectée à un collecteur d'échappement de réactif cathodique.

13. Système selon la revendication 10, 11 ou 12, dans lequel ledit fluide de refroidissement est de l'air, l'écoulement dudit fluide de refroidissement à travers ledit premier canal d'écoulement présentant une perte de charge inférieure à celle de l'écoulement dudit fluide de refroidissement à travers lesdits quatrièmes canaux d'écoulement (583).

## Patentansprüche

1. Elektrochemischer Reaktor (4), der Folgendes beinhaltet:
- eine Strömungsführung (5);
- eine Membran-Elektroden-Einheit (110);
- eine Umfangsdichtung (517), die zwischen der Strömungsführung (5) und der Membran-Elektroden-Einheit (110) angeordnet ist;
**dadurch gekennzeichnet, dass** er ferner Folgendes beinhaltet:
- eine Zwischendichtung (518), die zwischen der Strömungsführung (5) und der Membran-Elektroden-Einheit (110) angeordnet ist, wobei die Zwischendichtung von der Umfangsdichtung (517) umgeben ist und eine reaktive Zone (52) des elektrochemischen Reaktors umgibt;
- mindestens einen ersten Strömungsweg (54) eines Kühlfluids, der zwischen der Umfangsdichtung (517) und der Zwischendichtung (518) angeordnet ist, wobei der Strömungsweg Folgendes beinhaltet:
- einen ersten Strömungskanal (541), der sich entlang der Umfangsdichtung (517) zwischen einem ersten Ende (546), das mit einem ersten Kühlfluidsammler (597) verbunden ist, und einem zweiten, dem ersten entgegengesetzten Ende (547) erstreckt;
- einen zweiten Strömungskanal (545), der sich entlang der Zwischendichtung (518) zwischen einem ersten Ende (548), das mit einem zweiten Kühlfluidsammler (598) verbunden ist, und einem zweiten, dem ersten entgegengesetzten Ende (549) erstreckt; und
- entweder einen dritten Strömungskanal (543), der das jeweilige zweite Ende (547, 549) des ersten und des zweiten Strömungskanals (541, 545) miteinander verbindet, sodass ein im Bereich des ersten Sammlers eingespeistes Fluid den dritten Strömungskanal (543) durchqueren muss, um den zweiten Sammler zu erreichen;
- oder vierte Strömungskanäle (583), die entlang dem ersten Strömungskanal (581) verteilt sind und jeweils den ersten Strömungskanal mit dem zweiten Strömungskanal (585) verbinden, sodass ein im Bereich des ersten Sammlers (597) eingespeistes Fluid einen vierten Strömungskanal (583) durchqueren muss, um den zweiten Sammler (598) zu erreichen, wobei das erste Ende (586) des ersten Strömungskanals in der Nähe des zweiten Endes (589) des zweiten Strömungskanals (585) positioniert ist, wobei die vierten Strömungskanäle dazu konfiguriert sind, Druckverluste in einer Fluidströmung zwischen dem ersten und dem zweiten Strömungskanal hervorzurufen.

2. Elektrochemischer Reaktor (4) nach Anspruch 1, wobei die Umfangsdichtung (517) und die Zwischendichtung (518) aus unterschiedlichen Materialien bestehen, wobei das Material der Umfangsdichtung (517) eine Temperatur von -20 °C in seinem Einsatzbereich umfasst, wobei das Material der Zwischendichtung (518) eine Temperatur von 180 °C in seinem Einsatzbereich umfasst.

3. Elektrochemischer Reaktor (4) nach Anspruch 1 oder 2, wobei fünfte Kühlfluidströmungskanäle im Inneren der Bipolarplatte (5) in der Vertikalen der reaktiven Zone (52) bereitgestellt sind, wobei der Kühlfluidströmungsweg (53) und die fünften Kühlfluidströmungskanäle ein gleiches Kühlfluid umfassen.

4. Elektrochemischer Reaktor (4) nach den Ansprüchen 2 und 3, wobei die fünften Kühlfluidströmungskanäle mit einem dritten und einem vierten Sammler (593, 594), die sich in der reaktiven Zone (52) befinden, in Kommunikation stehen, wobei der dritte und der vierte Sammler von Dichtungen (513, 514) umgeben sind, die aus dem gleichen Material wie die Zwischendichtung (518) gebildet sind.

5. Elektrochemischer Reaktor (4) nach einem der vorhergehenden Ansprüche, wobei der Kühlfluidströmungsweg (53) ein Kühlfluid umfasst, das aus der Gruppe ausgewählt ist, die aus Luft, Diwasserstoff, Wasser und Glykol besteht.

6. Elektrochemischer Reaktor (4) nach einem der vorhergehenden Ansprüche, wobei sich der erste Sammler (597) näher an der Umfangsdichtung (517) als an der Zwischendichtung (518) befindet.

7. Elektrochemischer Reaktor (4) nach einem der vorhergehenden Ansprüche, wobei sich der zweite Sammler (598) näher an der Zwischendichtung (518) als an der Umfangsdichtung (517) befindet.

8. Elektrochemischer Reaktor (4) nach einem der vorhergehenden Ansprüche, der mehrere zwischen der Umfangsdichtung (517) und der Zwischendichtung (518) angeordnete Kühlfluidströmungswege (54, 55, 56) beinhaltet, die dem ersten Kühlfluidströmungsweg (54) ähnlich sind, wobei die kumulierte Länge der ersten Strömungskanäle dieser Strömungswege mindestens gleich 60 % der Länge der Umfangsdichtung (517) ist.

9. Elektrochemischer Reaktor nach einem der vorhergehenden Ansprüche, wobei der erste Strömungskanal (541) zwischen der Umfangsdichtung (517) und dem zweiten Strömungskanal (545) angeordnet ist.

10. System, das einen elektrochemischen Reaktor nach einem der vorhergehenden Ansprüche umfasst, das ferner einen Kompressor (61), der mit dem ersten und dem zweiten Sammler (597, 598) verbunden ist, beinhaltet, wobei der Kompressor dazu konfiguriert ist, Druckluft in den ersten Sammler einzuspeisen.

11. System nach Anspruch 10, das ferner einen Wärmetauscher (62) beinhaltet, der einen Eingang, der mit einem Ausgang des Kompressors verbunden ist, und einen Ausgang, der mit dem ersten Kühlfluidsammler verbunden ist, aufweist.

12. System nach Anspruch 11, wobei der Eingang des Kompressors (62) mit einem Auslasssammler eines kathodischen Reaktanten verbunden ist.

13. System nach Anspruch 10, 11 oder 12, wobei das Kühlfluid Luft ist, wobei die Kühlfluidströmung durch den ersten Strömungskanal einen Druckverlust aufweist, der kleiner als der der Kühlfluidströmung durch die vierten Strömungskanäle (583) ist.

## Claims

1. Electrochemical reactor (4), comprising:
- a flow guide (5);
- a membrane/electrode assembly (110);
- a peripheral seal (517) arranged between the flow guide (5) and the membrane/electrode assembly (110);
**characterized in that** it further comprises:
- an intermediate seal (518) arranged between the flow guide (5) and the membrane/electrode assembly (110), the intermediate seal being encircled by the peripheral seal (517) and encircling a reaction zone (52) of the electrochemical reactor;
- at least one first flow circuit (54) for cooling fluid arranged between the peripheral seal (517) and the intermediate seal (518), the flow circuit comprising:
- a first flow channel (541) extending along the peripheral seal (517) between a first end (546) connected to a first manifold (597) for cooling fluid and a second end (547) opposite to the first;
- a second flow channel (545) extending along the intermediate seal (518) between a first end (548) connected to a second manifold for cooling fluid (598) and a second end (549) opposite to the first; and
- either a third flow channel (543) connecting the respective second ends (547, 549) of the first and second flow channels (541, 545), so that a fluid introduced at the level of the first manifold must pass through the third flow channel (543) to return to the second manifold;
- or fourth flow channels (583) distributed along the first flow channel (581) and each connecting the first flow channel to the second flow channel (585), so that a fluid introduced at the level of the first manifold (597) must pass through a fourth flow channel (583) to return to the second manifold (598), the first end (586) of the first flow channel being positioned close to the second end (589) of the second flow channel (585), said fourth flow channels being configured to induce pressure losses in a fluid flow between the first and second flow channels.

2. Electrochemical reactor (4) according to Claim 1, in which the peripheral seal (517) and the intermediate seal (518) consist of different materials, the material of the peripheral seal (517) including a temperature of -20°C in its range of use, and the material of the intermediate seal (518) including a temperature of 180°C in its range of use.

3. Electrochemical reactor (4) according to Claim 1 or 2, in which fifth flow channels for cooling fluid are provided inside the bipolar plate (5) vertically in the reaction zone (52), the flow circuit (53) for cooling fluid and the fifth flow channels for cooling fluid including one and the same cooling fluid.

4. Electrochemical reactor (4) according to Claims 2 and 3, in which the fifth flow channels for cooling fluid are in communication with third and fourth manifolds (593, 594) arranged in the reaction zone (52), the third and fourth manifolds being encircled by seals (513, 514) formed of the same material as the intermediate seal (518).

5. Electrochemical reactor (4) according to any one of the preceding claims, in which the flow circuit (53) for cooling fluid includes a cooling fluid selected from the group consisting of air, dihydrogen, water and glycol.

6. Electrochemical reactor (4) according to any one of the preceding claims, in which the first manifold (597) is closer to the peripheral seal (517) than to the intermediate seal (518).

7. Electrochemical reactor (4) according to any one of the preceding claims, in which the second manifold (598) is closer to the intermediate seal (518) than to the peripheral seal (517).

8. Electrochemical reactor (4) according to any one of the preceding claims, comprising several flow circuits (54, 55, 56) for cooling fluid arranged between the peripheral seal (517) and the intermediate seal (518), similar to the first flow circuit (54) for cooling fluid, the cumulative length of the first flow channels of these flow circuits being at least equal to 60% of the length of the peripheral seal (517).

9. Electrochemical reactor according to any one of the preceding claims, in which said first flow channel (541) is arranged between the peripheral seal (517) and said second flow channel (545).

10. System including an electrochemical reactor according to any one of the preceding claims, further comprising a compressor (61) connected to the first and second manifolds (597, 598), said compressor being configured for introducing compressed air at the level of the first manifold.

11. System according to Claim 10, further comprising a heat exchanger (62) having an inlet connected to an outlet of the compressor and an outlet connected to said first manifold for cooling fluid.

12. System according to Claim 11, in which the inlet of the compressor (62) is connected to an exhaust manifold for cathodic reactant.

13. System according to Claim 10, 11 or 12, in which said cooling fluid is air, the flow of said cooling fluid through said first flow channel having a head loss less than that of the flow of said cooling fluid through said fourth flow channels (583).
